# EUROPEAN PATENT APPLICATION

(11) **EP 1 724 545 A1**
(43) Date of publication of application: **22.11.2006**
(21) Application number: 06111207.4
(22) Date of filing: 15.03.2006
(51) Int. Cl.: F28D 20/02

(54) **Heat-storage apparatus and method of operating heat-storage apparatus**

(30) Priority: 02.05.2005 JP 2005133863
(71) Applicant: Kabushiki Kaisha Kobe Seiko Sho (Kobe Steel, Ltd.), Kobe-shi, Hyogo 651-8585 (JP)
(72) Inventor: Takahashi, Kazuo, c/o Kobe Corporate Research Labs, Kobe-shi Hyogo 651-2271 (JP)
(74) Representative: TBK-Patent

(57) **Abstract**

The object of the present invention is to shorten a heat-storage time.

Provided is a heat-storage apparatus capable of storing heat in a heat-storage tank housing erythritol, which has a melting point of 100°C or higher, stores latent heat by melting and radiates latent heat by coagulating, by supplying the heat-storage tank with oil, which has a lighter specific gravity than that of erythritol, exchanges heat by directly contacting the erythritol, and is separated from the erythritol due to a difference of specific gravity, and also capable of taking out the heat stored in the heat-storage tank, in which the apparatus has: a thermometer that measures a temperature of the oil to be supplied to the heat-storage tank when storing heat in the heat-storage tank or taking out heat stored in the heat-storage tank; and a pump that stops supply of the erythritol when the temperature of the oil measured is outside a predetermined temperature range and controls a supply amount of the oil so as to bring a oil supply weight per unit weight of the heat storage into a predetermined range when the temperature is within the predetermined temperature range.

## Description

### Background of the Invention

### Field of the Invention

The present invention relates to a personal or professional heat-storage apparatus of a fixed type or a portable type, which is capable of storing heat by using nighttime electric power or exhaust vapor and taking out heat when necessary, and a method of operating the heat-storage apparatus.

### Description of the Prior Art

In recent years, it is necessary to reduce energy consumption during a peak time in daytime use of heat, and a heat-storage apparatus that temporarily stores heat generated has been suggested as shown in Japanese Patent Laid-Open No. Sho 58-104494. In the invention of Japanese Patent Laid-Open No. Sho 58-104494, a heat-storage tank houses a heat-storage material that stores heat and a heat medium that has a smaller specific gravity than that of the heat-storage material and is separated from the heat-storage material. In the heat-storage tank, the heat medium is separated from the heat-storage material such that the medium is located above the material due to the difference of specific gravity. Then, for example, when the heat medium, to which heat generated from ironworks, garbage-disposal facility or the like has been supplied, is supplied from a bottom portion of the heat-storage tank, the medium moves toward an upper portion of the heat-storage tank because its specific gravity is smaller than that of the heat-storage material. Then, due to direct contact of the medium with the heat-storage material during the movement, the heat supplied to the heat medium transmits to the heat-storage material, and thus heat is stored in the material.

Furthermore, in the case of using the heat stored, when the heat medium to which heat is not supplied is supplied from the bottom portion of the heat-storage tank in the same manner as above, the medium moves to the upper portion of the heat-storage tank because its specific gravity is smaller than that of the heat-storage material. Then, due to direct contact of the medium with the heat-storage material during the movement, the heat stored in the heat-storage material transmits to the heat medium, and thus heat is transmitted to the heat medium. Consequently, such a heat medium is supplied to a heat-removing device to collect heat in the heat-removing device, and thus heat can be used in an external device such as a heating device, for example.

In the case where heat is exchanged by direct contact between the heat medium and the heat-storage material as in Japanese Patent Laid-Open No. Sho 58-104494, erythritol or the like, for example, is generally used as a material used as the heat-storage material, and such a material is solid under a normal state due to a high melting point and its state changes to liquid when it stores heat. Since a long time is required in storing heat when a material having a high melting point is used, a method of efficiently storing heat without taking a long time is desired even when a material having a high melting point is used.

### Summary of the Invention

Consequently, it is an object of the present invention to provide a heat-storage apparatus capable of shortening a heat-storage time and a method of operating the heat-storage apparatus.

To achieve the above-described object, the present invention is a heat-storage apparatus capable of storing heat in a heat-storage tank housing a heat storage, which has a melting point of 100°C or higher, stores latent heat by melting and radiates latent heat by coagulating, by supplying the heat-storage tank with a heat-exchange medium, which has a lighter specific gravity than that of the heat storage, exchanges heat by directly contacting the heat storage, and is separated from the heat storage due to a difference of specific gravity, and also capable of taking out the heat stored in the heat-storage tank, in which the apparatus has: a temperature measuring section that measures a temperature of the heat-exchange medium to be supplied to the heat-storage tank when storing heat in the heat-storage tank or taking out heat stored in the heat-storage tank; and a supply amount control section that stops supply of heat-exchange medium when the temperature of the heat-exchange medium measured is outside a predetermined temperature range and controls a supply amount of the heat-exchange medium so as to bring a heat-exchange medium supply weight per unit weight of the heat storage into a predetermined range when the temperature is within the predetermined temperature range.

According to this constitution, the temperature of the heat-exchange medium to be supplied to the heat-storage tank is controlled to a predetermined temperature, and the supply amount can be controlled. In the case where the melting point of the heat storage is 100°C or higher, a heat-storage time becomes long when the temperature of the heat-exchange medium is low or the supply amount is small, but the heat-storage time can be shortened because the heat-exchange medium can be maintained at an optimum temperature and an optimum supply amount.

Further, it is preferable that the heat storage of the present invention be erythritol. With this, it is possible to store heat efficiently in a short time by using erythritol as the heat storage. Then, in this case, it is preferable that the specific heat of the heat-exchange medium be between 1.9kJ/kg°C and 2.5kJ/kg°C.

Further, the present invention is an apparatus in which, in the case of storing heat in the heat-storage tank, a predetermined temperature range is 125°C or higher and 165°C or lower, and the supply amount control section controls a flow rate supplied to the heat-storage tank so as to become the flow rate of 2.6kg/hr or higher and 13kg/hr or lower per unit weight of the heat storage. The heat-storage time can be shortened by this constitution.

Further, the present invention is an apparatus in which, in the case of storing heat in the heat-storage tank, the predetermined temperature range is 125°C or higher and 165°C or lower, and the supply amount control section controls the flow rate supplied to the heat-storage tank so as to become the flow rate of 3.4kg/hr or higher and 13kg/hr or lower per unit weight of the heat storage. The heat-storage time can be further shortened by this constitution.

Further, the present invention is an apparatus in which, in the case of storing heat in the heat-storage tank, the predetermined temperature range is 140°C or higher and 165°C or lower, and the supply amount control section controls the flow rate supplied to the heat-storage tank so as to become the flow rate of 5.2kg/hr or higher and 13kg/hr or lower per unit weight of the heat storage. The heat-storage time can be remarkably shortened by this constitution.

Furthermore, the present invention is an apparatus, in the case of taking out heat that has been stored in the heat-storage tank, the supply amount control section may control the flow rate supplied to the heat-storage tank so as to become the flow rate of 0.25kg/hr or higher and 10.4kg/hr or lower per unit weight of the heat storage.

According to this constitution, since the flow rate of heat-exchange medium supplied to the heat-storage tank is controlled when taking out the heat stored in the heat-storage tank, time required in taking out the stored heat can be adjusted. Then, by controlling the flow rate of the heat-exchange medium so as to become the flow rate of 0.25kg/hr or higher and 10.4kg/hr or lower, time required can be prevented from becoming long.

Furthermore, the present invention is an apparatus, in the case of taking out heat that has been stored in the heat-storage tank, the supply amount control section may control the flow rate supplied to the heat-storage tank so as to become the flow rate of 0.5kg/hr or higher and 10.4kg/hr or lower per unit weight of the heat storage.

According to this constitution, since the flow rate of heat-exchange medium supplied to the heat-storage tank is controlled when taking out the heat stored in the heat-storage tank, time required in taking out the stored heat can be adjusted. Then, by controlling the flow rate of the heat-exchange medium so as to become 0.5kg/hr or higher and 10.4kg/hr or lower, time required can be prevented from becoming long.

Furthermore, the present invention is an apparatus, in the case of taking out heat that has been stored in the heat-storage tank, the supply amount control section may control the flow rate supplied to the heat-storage tank so as to become the flow rate of 0.8kg/hr or higher and 10.4kg/hr or lower per unit weight of the heat storage.

According to this constitution, the flow rate of heat-exchange medium supplied to the heat-storage tank is controlled when taking out the heat stored in the heat-storage tank, time required in taking out the stored heat can be adjusted. Then, by controlling the flow rate of the heat-exchange medium so as to become 0.8kg/hr or higher and 10.4kg/hr or lower, time required can be prevented from becoming long.

Furthermore, in another viewpoint, the present invention is a method of operating a heat-storage apparatus capable of storing heat in a heat-storage tank housing a heat storage, which has a melting point of 100°C or higher, stores latent heat by melting and radiates latent heat by coagulating, by supplying the heat-storage tank with a heat-exchange medium, which has a lighter specific gravity than that of a heat storage, exchanges heat by directly contacting the heat storage, and is separated from the heat storage due to a difference of specific gravity, and also capable of taking out the heat stored in the heat-storage tank, in which the method has the steps of: measuring a temperature of the heat-exchange medium to be supplied to the heat-storage tank when storing heat in the heat-storage tank or taking out heat stored in the heat-storage tank; stopping supply of heat-exchange medium when the temperature of the heat-exchange medium measured is outside a predetermined temperature range; controlling the supply amount of the heat-exchange medium so as to bring a heat-exchange medium supply weight per unit weight of the heat storage into a predetermined range when the temperature is within the predetermined temperature range; and supplying the heat-exchange medium to the heat-storage tank at the flow rate controlled.

According to this constitution, the temperature of the heat-exchange medium to be supplied to the heat-storage tank is controlled to a predetermined temperature, and the supply amount can be controlled. In the case where the melting point of the heat storage is 100°C or higher, a heat-storage time becomes long when the temperature of the heat-exchange medium is low or the supply amount is small, but the heat-storage time can be shortened because the heat-exchange medium can be maintained at an optimum temperature and an optimum supply amount.

Further, it is preferable that the heat storage of the present invention be erythritol. With this, it is possible to store heat efficiently in a short time by using erythritol for the heat storage. Then, in this case, it is preferable that the specific heat of the heat-exchange medium be between 1.9kJ/kg°C and 2.5kJ/kg°C.

Further, the present invention is a method in which, in the case of storing heat in the heat-storage tank, a predetermined temperature range is 125°C or higher and 165°C or lower, and the supply amount control section may control a flow rate supplied to the heat-storage tank so as to become the flow rate of 2.6kg/hr or higher and 13kg/hr or lower per unit weight of the heat storage. The heat-storage time can be shortened by this constitution.

Further, the present invention is a method in which, in the case of storing heat in the heat-storage tank, the predetermined temperature range is 125°C or higher and 165°C or lower, and the supply amount control section may control the flow rate supplied to the heat-storage tank so as to become the flow rate of 3.4kg/hr or higher and 13kg/hr or lower per unit weight of the heat storage. The heat-storage time can be further shortened by this constitution.

Further, the present invention is a method in which, in the case of storing heat in the heat-storage tank, the predetermined temperature range is 140°C or higher and 165°C or lower, and the supply amount control section may control the flow rate supplied to the heat-storage tank so as to become the flow rate of 5.2kg/hr or higher and 13kg/hr or lower per unit weight of the heat storage. The heat-storage time can be remarkably shortened by this constitution.

Furthermore, the present invention is a method in which, in the case of taking out the heat stored in the heat-storage tank, a flow rate supplied to the heat-storage tank may be controlled to become the flow rate of 0.25kg/hr or higher and 10.4kg/hr or lower per unit weight of the heat storage.

According to this constitution, since the flow rate of heat-exchange medium supplied to the heat-storage tank is controlled when taking out the heat stored in the heat-storage tank, time required in taking out the stored heat can be adjusted. Then, by controlling the flow rate of the heat-exchange medium so as to become 0.25kg/hr or higher and 10.4kg/hr or lower, time required can be prevented from becoming long.

Further, the present invention is a method in which, in the case of taking out the heat stored in the heat-storage tank, the flow rate supplied to the heat-storage tank may be controlled to become the flow rate of 0.5kg/hr or higher and 10.4kg/hr or lower per unit weight of the heat storage.

According to this constitution, since the flow rate of heat-exchange medium supplied to the heat-storage tank is controlled when taking out the heat stored in the heat-storage tank, time required in taking out the stored heat can be adjusted. Then, by controlling the flow rate of the heat-exchange medium so as to become 0.5kg/hr or higher and 10.4kg/hr or lower, time required can be prevented from becoming long.

Still further, the present invention is a method in which, in the case of taking out the heat stored in the heat-storage tank, the flow rate supplied to the heat-storage tank may be controlled to become the flow rate of 0.8kg/hr or higher and 10.4kg/hr or lower per unit weight of the heat storage.

According to this constitution, since the flow rate of heat-exchange medium supplied to the heat-storage tank is controlled when taking out the heat stored in the heat-storage tank, time required in taking out the stored heat can be adjusted. Then, by controlling the flow rate of the heat-exchange medium so as to become 0.8kg/hr or higher and 10.4kg/hr or lower, time required can be prevented from becoming long.

### Brief Description of the Drawings

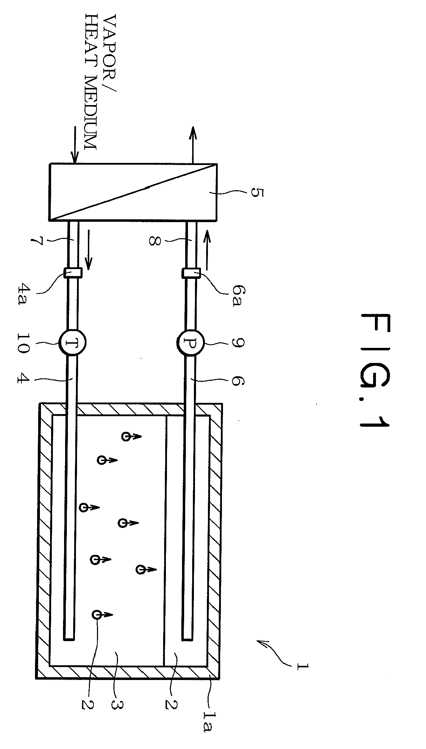

Fig. 1 is a schematic view of a heat-storage apparatus according to a preferred embodiment of the present invention.
Fig. 2 is a view showing a result of experiment in which relationship between a supply amount and a supply temperature of oil and heat-storage time was checked.
Fig. 3 is a view showing an experiment result of a simulation in which relationship between the supply amount and the supply temperature of oil and heat-storage time was checked.
Fig. 4 is a view showing an experiment result of a simulation in which relationship between the supply amount of oil and heat radiation was checked.

### Preferred Embodiment of the Invention

A preferred embodiment of the present invention will be described as follows with reference to the drawings.

A heat-storage apparatus 1 according to an embodiment of the present invention is an apparatus capable of storing waste heat generated from a factory, garbage-disposal facility or the like and taking out the stored heat in using it for other devices (such as heating device and water heater), and it has a heat-storage tank 1a in which oil 2 (heat exchange medium), erythritol 3 (heat storage) are housed, a supply tube 4, and a discharge tube 6. The oil 2 and the erythritol 3 housed in the heat-storage tank 1a do not mix with each other, the oil 2 has a smaller specific gravity than that of the erythritol 3, so that they are housed in the heat-storage tank 1a in a vertically separated manner (oil 2 in an upper layer and erythritol 3 in a lower layer). Further, since the oil 2 and the erythritol 3 do not mix with each other, a member or the like for separating them is not laid between the oil 2 and the erythritol 3, and the oil 2 and the erythritol 3 are in direct contact to each other.

The oil 2 is a heat medium that is used when taking in waste heat generated from a factory or the like in a heat exchanger 5 (described later), exchanging heat by the direct contact with the erythritol 3 to store the waste heat in the erythritol 3, and collecting the heat stored in the erythritol 3 in the heat exchanger 5 (described later) in order to use the heat for other devices. Specifically, when the oil 2 is discharged from the discharge tube 6, which is disposed at a lower portion of the heat-storage tank 1a, into the erythritol 3, the oil goes up to the oil 2 in an upper layer because its specific gravity is smaller than that of erythritol 3, and is taken in by the oil 2. Heat exchange is performed between the oil 2 and the erythritol 3 by the direct contact with the erythritol 3 while the oil goes up. In the explanation below, collecting the heat stored in the erythritol 3 in the heat-storage tank 1a is called heat radiation. Note that the specific heat of the oil 2 in this embodiment is from 1.9 kJ/kg°C to 2.5kJ/kg°C.

The erythritol 3 exchanges heat with the oil 2 by the direct contact with the oil 2 depending on a state change between solid and liquid. Specifically, the melting point of the erythritol 3 is about 119°C and it is solid under the normal state (room temperature state). Then, when the heat of the oil 2 is transmitted by directly contacting the oil 2, which has taken in the waste heat generated from a factory or the like, in the heat exchanger 5 (described later), the state of erythritol changes from solid to liquid, and stores heat when it is in a liquid state. Further, when the erythritol 3 is in a heat-storing state, the stored heat is transmitted to the oil 2 by directly contacting the oil 2 to which heat is not supplied, and the state of erythritol is changed from liquid to solid. In other words, the erythritol 3 is in the liquid state when heat is stored and in the solid state when heat is not stored.

The supply tube 4 is a tube in which the oil 2 flows, and is provided horizontally in a lower layer portion of the heat-storage tank 1a, where the housed erythritol 3 is located, in a penetrated manner. Further, discharge holes (not shown) are provided in the supply tube 4, and the oil 2 in the supply tube 4 is discharged from the discharge holes into the erythritol 3. Note that the discharge holes are provided so as to be opened in the vertically downward direction of the supply tube 4. Accordingly, since the erythritol 3 has a larger specific gravity than that of the oil 2, the erythritol 3 does not enter the supply tube 4 by driving away the oil 2 to be discharged from the discharge holes, which prevents the erythritol 3 from being solidified inside the supply tube 4 to plug the tube. Further, the supply tube 4 has a connection port 4a, and the connection port 4a is connected detachably to an intake tube 7 disposed at an oil intake port of the heat exchanger 5.

The discharge tube 6 is a tube in which the oil 2 flows, and is provided horizontally in an upper layer portion of the heat-storage tank 1a, where the housed oil 2 is located, in a penetrated manner. Then, a connection port 6a of the discharge tube 6 is connected detachably to a removing tube 8 disposed at the oil intake port of the heat exchanger 5 in the same manner as the supply tube 4. This allows the oil 2 to circulate between the heat-storage tank 1a and the heat exchanger 5. Specifically, by activating a pump 9 (described later), the oil 2 flows in the supply tube 4 and the discharge tube 6 and circulates between the heat-storage tank 1a and the heat exchanger 5.

Meanwhile, since the supply tube 4 and the discharge tube 6 are connected detachably to the heat exchanger 5 in this embodiment, the heat-storage apparatus 1 is a portable heat-storage apparatus. In other words, the heat-storage apparatus can be transported after heat is stored in a factory or the like and can radiate the heat in a different place from a place where heat has been stored.

The heat exchanger 5 supplies heat to the oil 2 being the heat medium when storing heat, or collecting the heat from the oil 2 when radiating heat. Specifically, the heat exchanger 5 is provided in a factory from which waste heat is generated, an installed place of a device using the stored heat, or the like. Then, the exchanger takes in the oil 2 to which heat has not been supplied from the heat-storage tank 1a on one hand, and takes in vapor created from the waste heat generated from the factory on the other hand. The heat exchanger 5 has pipes in which the oil 2 and the vapor flow, which have been taken in, and the pipes are provided in the heat exchanger 5 so as to contact each other. Then, heat of vapor is transmitted indirectly to the oil 2 via the wall of the pipes. By discharging the oil 2 to which heat has been transmitted to the heat-storage tank 1a, heat can be stored.

Further, when radiating heat, the exchanger takes in the oil 2 that has taken in the heat stored in the heat-storage tank 1a on one hand, and takes in a heat medium to be used in a device using heat. For example, when such device is a water heater producing hot water, the heat medium is water. Then, tubes in which the oil 2 that has been taken in and water (heat medium) flow are provided so as to contact each other, and heat of the oil 2 is transmitted indirectly to water via the wall of the pipes. This makes the water become hot water. Consequently, heat can be radiated by repeating the above-described operation.

The pump 9 (supply amount control section) is provided in the middle of the discharge tube 6, the pump 9 allows the oil 2 to circulate the heat-storage apparatus 1 constituted as above and the heat exchanger 5 connected to the apparatus, and the flow rate of the circulating oil 2 is controlled. In other words, by controlling the flow rate of the oil 2 circulating when storing heat or radiating heat, the flow rate of the oil 2 to be supplied to the heat-storage tank 1a (hereinafter, referred to as supply rate) can be controlled. Furthermore, a thermometer 10 (temperature measuring section) is provided in the middle of the supply tube 4, and it measures the temperature of the oil 2 to be supplied to the heat-storage tank 1a. Then, the pump 9 controls the supply amount of the oil 2 to be supplied corresponding to a measurement result of the thermometer 10. Specifically, the pump 9 stops the supply of the oil 2 if a measured temperature is outside a predetermined temperature range. Further, the pump 9 supplies the oil 2 to the heat-storage tank 1a at a supply amount corresponding to each temperature range when the measured temperature is within the predetermined temperature range. Note that a preferred temperature range and supply amount will be described later.

As described above, with the heat-storage apparatus having the pump 9 and the thermometer 10, which controls the supply amount and the temperature of the oil 2 when storing heat or radiating heat, heat storage and heat radiation can be performed efficiently. As a result, a heat-storage time and a heat-radiation time can be suppressed within a fixed time. Note that the heat-storage time is a time required until the erythritol 3 becomes a complete liquid state, and the heat-radiation time is a time required until all stored heat is collected and the erythritol 3 becomes a complete solid state.

Herein, description will be made for the relationship between the supply amount and the temperature of the oil 2, which are controlled by the pump 9 and the thermometer 10, and the heat-storage time and the heat-radiation time.

### (Heat-storage time)

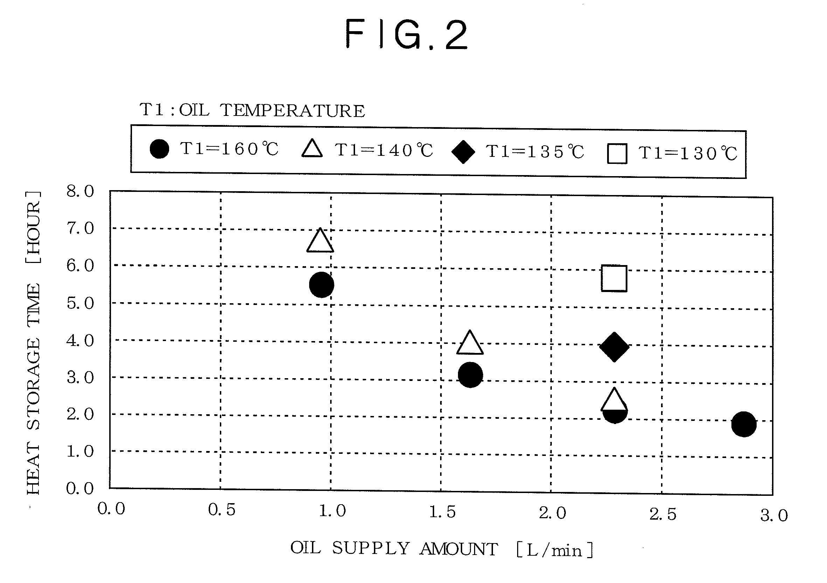

First, an experiment of checking the relationship between the supply amount of the oil 2 and the temperature and the heat-storage time of the oil 2 to be supplied to the heat-storage tank 1a was conducted by using the erythritol 3 having the melting point of about 119°C, which is used as the heat storage in this embodiment, and its result is shown in Fig. 2. In this experiment, the temperature of the oil 2 was set to 160°C, 140°C, 135°C and 130°C, the supply amount (?/min) of oil at each temperature was changed, and a heat-storage time required was checked. As it is read from Fig. 2, the heat-storage time is shortened as the supply amount increases regarding the oil having the temperature of 160°C. Further, when oil is supplied at the supply amount of about 2.3 (?/min), about 6 hours of heat-storage time is required for the oil having the temperature of 130°C while about 2 hours of heat-storage time is required for the oil having the temperature of 160°C, and thus the graph shows that the heat-storage time is shortened as the temperature of oil becomes higher. Therefore, it can be read from the graph that the higher the temperature of the oil 2 to be supplied and the larger the supply amount become, the shorter the heat-storage time can be.

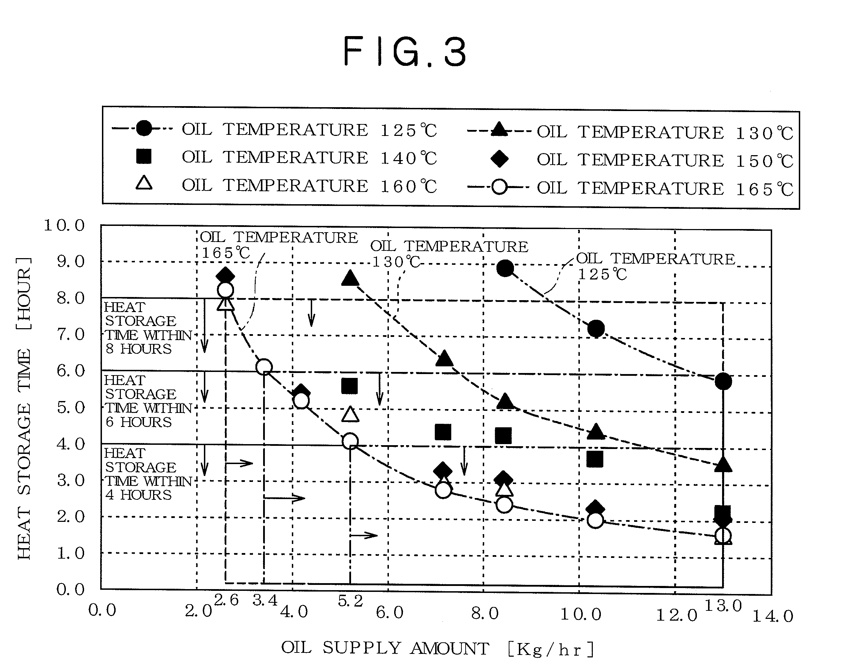

Next, a simulator adjusted according to the experiment result was created, the temperature of the oil 2 to be supplied was set to 165°C, 160°C, 150°C, 140°C, 130°C and 125°C, the supply amount (kg/hr) of oil at each temperature was changed, a simulation was performed to check the heat-storage time required, and Fig. 3 shows its simulation result. Note that the supply amount of oil is set to a supply amount per unit weight (1kg) of the erythritol 3 in this simulation. As it is read from Fig. 3, in the case where the supply amount of the oil 2 to be supplied in the heat-storage tank 1a per the unit weight (1kg) of the erythritol 3 is 2.6kg/hr or higher and 13kg/hr or lower, and the temperature of the oil 2 to be supplied is 125°C or higher and 165°C or lower, the heat-storage time can be suppressed within about 8 hours. Further, in the case where the supply amount of the oil 2 is 3.4kg/hr or higher and 13kg/hr or lower, and the temperature of the oil 2 to be supplied is 125°C or higher and 165°C or lower, the heat-storage time can be suppressed within about 6 hours. Still further, in the case where the supply amount of the oil 2 is 5.2kg/hr or higher and 13kg/hr or lower, and the temperature of the oil 2 to be supplied is 140°C or higher and 165°C or lower, the heat-storage time can be suppressed within about 4 hours.

As it is known from the above-described experiment result, the heat-storage time can be suppressed within a fixed time by controlling the supply amount and the temperature of oil, and it is possible to operate the heat-storage apparatus efficiently by using the numerical values read on Fig. 3.

### (Heat-radiation time)

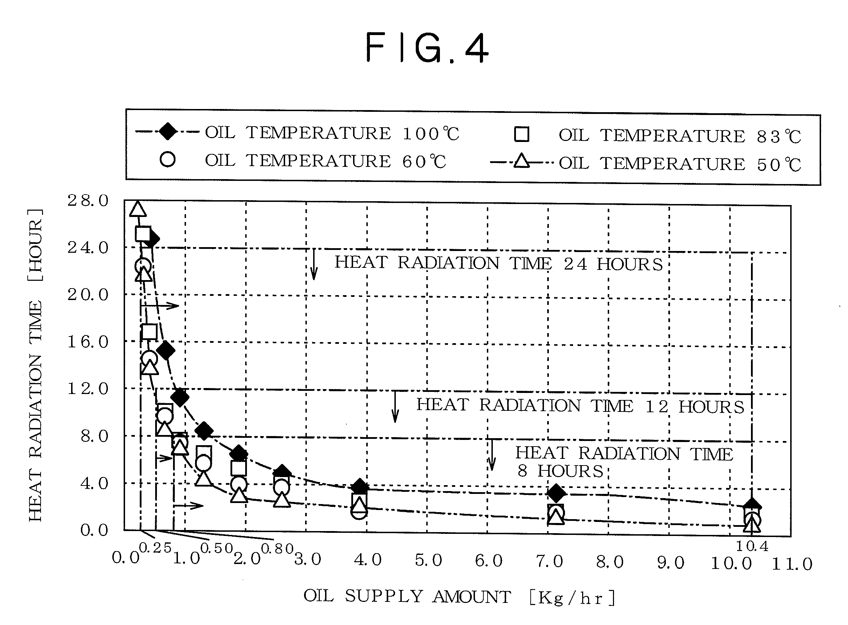

Next, a simulation for checking the relationship between a supply amount the oil 2, which has taking in the stored heat, to the heat-storage tank 1a and a heat-radiation time was performed, and Fig. 4 shows its simulation result. In this simulation, in the case where the temperature of the oil 2 to be discharged from the heat-storage tank 1a was 100°C, 83°C, 60°C and 50°C, the supply amount (kg/hr) of oil at each temperature was changed, and the heat-radiation time required was checked. As it is read on Fig. 4, it is possible to suppress the heat-radiation time within 24 hours when the supply amount of the oil 2 is 0.25kg/hr or higher and 10.4kg/hr or lower regardless of the temperature of the oil 2 to be discharged from the heat-storage tank 1a. Further, the heat-radiation time can be suppressed within 12 hours when the supply amount of the oil 2 is 0.5kg/hr or higher and 10.4kg/hr or lower. Furthermore, the heat-radiation time can be suppressed within 8 hours when the supply amount of the oil 2 is 0.8kg/hr or higher and 10.4kg/hr or lower.

As it is known from the simulation result, the heat-radiation time can be suppressed within a fixed time by controlling the supply amount of oil, and it is possible to operate the heat-storage apparatus efficiently even during heat radiation by operating the heat-storage apparatus 1 by using the numerical values read on Fig. 4.

Next, description will be made for an operation during heat storage and heat radiation (heat-storing and heat-radiating methods) of the above-described heat-storage apparatus 1.

### (Heat-storing method)

First, the operation of the pump 9 is started to allow the oil 2 to flow in the discharge tube 6. With this, the oil 2 in the upper layer, which is housed in the heat-storage tank 1a, flows in the discharge tube 6 and is supplied from the heat-storage tank 1a to the heat exchanger 5. Heat is transmitted from the vapor generated in a factory, which has been taken in by the heat exchanger 5 on the other hand, to the oil 2 that has been taken in by the heat exchanger 5, and thus heat is supplied. Then, the oil 2 to which heat has been supplied flows in the supply tube 4, and is discharged into the erythritol 3 in the heat-storage tank 1a. At this point, the pump 9 is operated so as to make a heat-storage time become within the predetermined heat-storage time. Specifically, if the temperature of the oil 2 measured by the thermometer 10 is outside the predetermined temperature range, the pump 9 is stopped to stop the supply of the oil 2. Further, when the temperature is within the predetermined temperature range, the flow rate (supply amount) of the oil 2 flowing in the discharge tube 6 and the supply tube 4 is controlled to make it become a supply amount corresponding to each temperature. The oil 2 discharged in the erythritol 3 in this manner goes up while it stores heat in the erythritol 3 by performing heat exchange by the direct contact with the erythritol 3, and is taken in by the oil 2 of the upper layer in the heat-storage tank 1a. Then, the above-described operation is repeated until the erythritol 3 completely becomes a liquid state.

### (Heat-radiating method)

First, the operation of the pump 9 is started to allow the oil 2 to flow in the discharge tube 6. With this, the oil 2 in the upper layer, which is housed in the heat-storage tank 1a, flows in the discharge tube 6 and is supplied from the heat-storage tank 1a to the heat exchanger 5. The oil 2 that has been taken in by the heat exchanger 5 supplies heat to a heat medium to be used in other devices, which has been taken in by the heat exchanger 5 on the other hand. Then, the oil 2 from which heat has been collected flows in the supply tube 4 and is discharged into the erythritol 3 in the heat-storage tank 1a. At this point, the pump 9 is operated so as to make a heat-storage time become within the predetermined heat-storage time to control the flow rate of the oil 2 flowing in the discharge tube 6 and the supply tube 4, that is, the supply amount of the oil 2. The oil 2 discharged in the erythritol 3 goes up while it takes in the stored heat of the erythritol 3 by performing heat exchange by the direct contact with the erythritol 3, and is taken in by the oil 2 of the upper layer in the heat-storage tank 1a. Then, the above-described operation is repeated until the erythritol 3 completely becomes a solid state.

As described above, this embodiment is the heat-storage apparatus 1 capable of storing heat in the heat-storage tank 1a housing the erythritol 3, which has the melting point at 100°C or higher, stores latent heat by melting and radiates the latent heat by coagulating, by supplying the heat-storage tank 1a with the oil 2 having a lighter specific gravity than that of the erythritol 3, which performs heat exchange by directly contacting erythritol and is separated from the erythritol 3 due to the difference of specific gravity, and capable of taking out heat stored in the heat-storage tank 1a, in which the apparatus has: the thermometer 10 that measures the temperature of the oil 2 to be supplied to the heat-storage tank 1a when storing heat in the heat-storage tank 1a or taking out heat stored in the heat-storage tank 1a; and the pump 9 that stops the supply of the oil 2 if the temperature of the oil 2 measured is outside the predetermined range and controls the supply amount of the oil so as to bring an oil supply weight of the erythritol 3 per unit weight into a predetermined range when the temperature is within the predetermined temperature range.

According to this constitution, the temperature of the oil 2 to be supplied to the heat-storage tank 1a can be controlled to a predetermined temperature to control the supply amount. In the case where the melting point of the erythritol 3 is at 100°C or higher, the heat-storage time becomes longer when the temperature of the oil 2 is low or the supply amount is small, but the heat-storage time can be shortened because the oil 2 can be set to an optimum temperature and an optimum supply amount.

Further, the heat storage in this embodiment is erythritol. With this, heat can be stored efficiently in a short time by using the erythritol as the heat storage. Then, the specific heat of the oil 2 is between 1.9kJ/kg°C and 2.5kJ/kg°C.

Further, this embodiment is an apparatus in which, in the case of storing heat in the heat-storage tank 1a, the predetermined temperature range is 125°C or higher and 165°C or lower, and the pump 9 controls a flow rate supplied to the heat-storage tank 1a so as to become the flow rate of 2.6kg/hr or higher and 13kg/hr or lower per unit weight of the erythritol 3. The heat-storage time can be shortened by this constitution.

Further, this embodiment is an apparatus in which, in the case of storing heat in the heat-storage tank 1a, the predetermined temperature range is 125°C or higher and 165°C or lower, and the pump 9 controls the flow rate supplied to the heat-storage tank 1a so as to become the flow rate of 3.4kg/hr or higher and 13kg/hr or lower per unit weight of the erythritol 3. The heat-storage time can be further shortened by this constitution.

Further, this embodiment is an apparatus in which, in the case of storing heat in the heat-storage tank 1a, the predetermined temperature range is 140°C or higher and 165°C or lower, and the pump 9 controls the flow rate supplied to the heat-storage tank 1a so as to become the flow rate of 5.2kg/hr or higher and 13kg/hr or lower per unit weight of the erythritol 3. The heat-storage time can be remarkably shortened by this constitution.

Furthermore, this embodiment is an apparatus in which, in the case of taking out heat that has been stored in the heat-storage tank 1a, the pump 9 controls the flow rate supplied to the heat-storage tank 1a so as to become the flow rate of 0.25kg/hr or higher and 10.4kg/hr or lower per unit weight of the erythritol 3.

According to this constitution, since the flow rate of the oil 2 supplied to the heat-storage tank 1a is controlled when taking out the heat stored in the heat-storage tank 1a, time required in taking out the stored heat can be adjusted. Then, by controlling the flow rate of the oil 2 so as to become 0.25kg/hr or higher and 10.4kg/hr or lower, time required can be prevented from becoming long.

Furthermore, this embodiment is an apparatus in which, in the case of taking out heat that has been stored in the heat-storage tank 1a, the pump 9 controls the flow rate supplied to the heat-storage tank 1a so as to become the flow rate of 0.5kg/hr or higher and 10.4kg/hr or lower per unit weight of the erythritol 3.

According to this constitution, since the flow rate of the oil 2 supplied to the heat-storage tank 1a is controlled when taking out the heat stored in the heat-storage tank 1a, time required in taking out the stored heat can be adjusted. Then, by controlling the flow rate of the oil 2 so as to become 0.5kg/hr or higher and 10.4kg/hr or lower, time required can be prevented from becoming long.

Furthermore, this embodiment is an apparatus in which, in the case of taking out heat that has been stored in the heat-storage tank 1a, the pump 9 controls the flow rate supplied to the heat-storage tank 1a so as to become the flow rate of 0.8kg/hr or higher and 10.4kg/hr or lower per unit weight of the erythritol 3.

According to this constitution, since the flow rate of the oil 2 supplied to the heat-storage tank 1a is controlled when taking out the heat stored in the heat-storage tank 1a, time required in taking out the stored heat can be adjusted. Then, by controlling the flow rate of the oil 2 so as to become 0.8kg/hr or higher and 10.4kg/hr or lower, time required can be prevented from becoming long.

Still further, this embodiment is a method of operating the heat-storage apparatus, which is capable of storing heat in the heat-storage tank 1a housing the heat storage, which has the melting point at 100°C or higher, stores latent heat by melting and radiates the latent heat by coagulating, by supplying the heat-storage tank 1a with the oil 2 having a lighter specific gravity than the erythritol 3, which performs heat exchange by directly contacting erythritol and is separated from the erythritol 3 due to the difference of specific gravity, and capable of taking out heat stored in the heat-storage tank 1a, in which the temperature of the oil 2 to be supplied to the heat-storage tank 1a is measured when storing heat in the heat-storage tank 1a or taking out heat stored in the heat-storage tank 1a, the supply of the oil 2 is stopped if the temperature of the oil 2 measured is outside the predetermined range, the supply amount of the oil is controlled so as to bring an oil supply weight of the erythritol 3 per unit weight into a predetermined range when the measured temperature is within the predetermined temperature range, and the oil 2 is supplied to the heat-storage tank 1a at a controlled flow rate.

According to this constitution, the temperature of the oil 2 to be supplied to the heat-storage tank 1a can be controlled to a predetermined temperature to control the supply amount. In the case where the melting point of the erythritol 3 is at 100°C or higher, the heat-storage time becomes longer when the temperature of the oil 2 is low or the supply amount is small, but the heat-storage time can be shortened because the oil 2 can be set to an optimum temperature and an optimum supply amount.

Further, the heat storage in this embodiment is erythritol. With this, heat can be stored efficiently in a short time by using the erythritol as the heat storage. Then, in this case, it is preferable that the specific heat of the oil 2 be between 1.9kJ/kg°C and 2.5kJ/kg°C.

Furthermore, this embodiment is a method in which, in the case of storing heat in the heat-storage tank 1a, the predetermined temperature range is 125°C or higher and 165°C or lower, and the flow rate of the oil 2 may be controlled so as to become the flow rate of 2.6kg/hr or higher and 13kg/hr or lower per unit weight of the erythritol 3. The heat-storage time can be shortened by this constitution.

Further, this embodiment is a method in which, in the case of storing heat in the heat-storage tank 1a, the predetermined temperature range is 125°C or higher and 165°C or lower, and the flow rate of the oil 2 may be controlled so as to become the flow rate of 3.4kg/hr or higher and 13kg/hr or lower per unit weight of the erythritol 3. The heat-storage time can be further shortened by this constitution.

Further, this embodiment is a method in which, in the case of storing heat in the heat-storage tank 1a, the predetermined temperature range is 140°C or higher and 165°C or lower, and the flow rate of the oil 2 may be controlled so as to become the flow rate of 5.2kg/hr or higher and 13kg/hr or lower per unit weight of the erythritol 3. The heat-storage time can be remarkably shortened by this constitution.

Moreover, this embodiment is a method in which, in the case of storing heat in the heat-storage tank 1a, the flow rate of oil to be supplied to the heat-storage tank 1a is controlled so as to become the flow rate of 0.25kg/hr or higher and 10.4kg/hr or lower per unit weight of the erythritol 3.

According to this constitution, since the flow rate of the oil 2 to be supplied to the heat-storage tank 1a is controlled when taking out the heat stored in the heat-storage tank 1a, time required in taking out the stored heat can be adjusted. Then, by controlling the flow rate of the oil 2 so as to become 0.25kg/hr or higher and 10.4kg/hr or lower, time required can be prevented from becoming long.

Further, this embodiment is a method in which, in the case of taking out heat stored in the heat-storage tank 1a, the flow rate of oil to be supplied to the heat-storage tank 1a is controlled so as to become the flow rate of 0.5kg/hr or higher and 10.4kg/hr or lower per unit weight of the erythritol 3.

According to this constitution, since the flow rate of the oil 2 to be supplied to the heat-storage tank 1a is controlled when taking out the heat stored in the heat-storage tank 1a, time required in taking out the stored heat can be adjusted. Then, by controlling the flow rate of the oil 2 so as to become 0.5kg/hr or higher and 10.4kg/hr or lower, time required can be prevented from becoming long.

Furthermore, this embodiment is a method in which, in the case of taking out heat stored in the heat-storage tank 1a, the flow rate of oil to be supplied to the heat-storage tank 1a is controlled so as to become the flow rate of 0.8kg/hr or higher and 10.4kg/hr or lower per unit weight of the erythritol 3.

According to this constitution, the flow rate of the oil 2 supplied to the heat-storage tank 1a is controlled when taking out the heat stored in the heat-storage tank 1a, time required in taking out the stored heat can be adjusted. Then, by controlling the flow rate of the oil 2 so as to become 0.8kg/hr or higher and 10.4kg/hr or lower, time required can be prevented from becoming long.

Still further, the present invention has been described based on the preferred embodiment, but it is possible to modify the present invention within a scope of the gist of the invention. Specifically, although the pump 9 controls the supply amount of the oil 2 in this embodiment, devices other than the pump may be used to control the amount. Further, although the heat-storage apparatus 1 of this embodiment is a portable type, it may be a fixed type.

In addition, although the present invention is described in the above-described preferred embodiment, the present invention is not limited to this. It should be understood that various embodiments without departing from the spirit and the scope of the present invention can be employed. Furthermore, the operation and the effect by the constitutions of the present invention are described in this embodiment, but such operation and effect are only examples, and not limitative to the present invention.

The object of the present invention is to shorten a heat-storage time.

Provided is a heat-storage apparatus capable of storing heat in a heat-storage tank housing erythritol, which has a melting point of 100°C or higher, stores latent heat by melting and radiates latent heat by coagulating, by supplying the heat-storage tank with oil, which has a lighter specific gravity than that of erythritol, exchanges heat by directly contacting the erythritol, and is separated from the erythritol due to a difference of specific gravity, and also capable of taking out the heat stored in the heat-storage tank, in which the apparatus has: a thermometer that measures a temperature of the oil to be supplied to the heat-storage tank when storing heat in the heat-storage tank or taking out heat stored in the heat-storage tank; and a pump that stops supply of the erythritol when the temperature of the oil measured is outside a predetermined temperature range and controls a supply amount of the oil so as to bring a oil supply weight per unit weight of the heat storage into a predetermined range when the temperature is within the predetermined temperature range.

## Claims

1. A heat-storage apparatus capable of storing heat in a heat-storage tank housing a heat storage, which has a melting point of 100°C or higher, stores latent heat by melting and radiates the latent heat by coagulating, by supplying said heat-storage tank with a heat-exchange medium, which has a lighter specific gravity than that of said heat storage, exchanges heat by directly contacting the heat storage, and is separated from said heat storage due to a difference of specific gravity, and also capable of taking out the heat stored in said heat-storage tank, said apparatus comprising:
a temperature measuring section that measures a temperature of said heat-exchange medium to be supplied to said heat-storage tank when storing heat in said heat-storage tank or taking out heat stored in said heat-storage tank; and
a supply amount control section that stops supply of said heat-exchange medium when the temperature of said heat-exchange medium measured is outside a predetermined temperature range and controls a supply amount of said heat-exchange medium so as to bring a heat-exchange medium supply weight per unit weight of said heat storage into a predetermined range when said temperature is within the predetermined temperature range.

2. The heat-storage apparatus according to Claim 1, wherein
said heat storage is erythritol.

3. The heat-storage apparatus according to Claim 2, wherein
the specific heat of said heat-exchange medium is between 1.9kJ/kg°C and 2.5kJ/kg°C.

4. The heat-storage apparatus according to Claim 3, wherein
in the case of storing heat in said heat-storage tank,
said predetermined temperature range is 125°C or higher and 165°C or lower, and
said supply amount control section controls a flow rate to be supplied to said heat-storage tank so as to become the flow rate of 2.6kg/hr or higher and 13kg/hr or lower per unit weight of said heat storage.

5. The heat-storage apparatus according to Claim 3, wherein
in the case of storing heat in said heat-storage tank,
said predetermined temperature range is 125°C or higher and 165°C or lower, and
said supply amount control section controls a flow rate to be supplied to said heat-storage tank so as to become the flow rate of 3.4kg/hr or higher and 13kg/hr or lower per unit weight of said heat storage.

6. The heat-storage apparatus according to Claim 3, wherein
in the case of storing heat in said heat-storage tank,
said predetermined temperature range is 140°C or higher and 165°C or lower, and
said supply amount control section controls a flow rate to be supplied to said heat-storage tank so as to become the flow rate of 5.2kg/hr or higher and 13kg/hr or lower per unit weight of said heat storage.

7. The heat-storage apparatus according to Claim 3, wherein
in the case of taking out heat that has been stored in said heat-storage tank,
said supply amount control section controls a flow rate to be supplied to said heat-storage tank so as to become the flow rate of 0.25kg/hr or higher and 10.4kg/hr or lower per unit weight of said heat storage.

8. The heat-storage apparatus according to Claim 3, wherein
in the case of taking out heat that has been stored in said heat-storage tank,
said supply amount control section controls a flow rate to be supplied to said heat-storage tank so as to become the flow rate of 0.5kg/hr or higher and 10.4kg/hr or lower per unit weight of said heat storage.

9. The heat-storage apparatus according to Claim 3, wherein
in the case of taking out heat that has been stored in said heat-storage tank,
said supply amount control section controls a flow rate to be supplied to said heat-storage tank so as to become the flow rate of 0.8kg/hr or higher and 10.4kg/hr or lower per unit weight of said heat storage.

10. A method of operating a heat-storage apparatus, which is capable of storing heat in a heat-storage tank housing a heat storage, which has a melting point of 100°C or higher, stores latent heat by melting and radiates the latent heat by coagulating, by supplying said heat-storage tank with a heat-exchange medium, which has a lighter specific gravity than that of said heat storage, exchanges heat by directly contacting the heat storage, and is separated from said heat storage due to a difference of specific gravity, and also capable of taking out the heat stored in said heat-storage tank, said method comprising the steps of:
measuring a temperature of said heat-exchange medium to be supplied to said heat-storage tank when storing heat in said heat-storage tank or taking out heat stored in said heat-storage tank;
stopping supply of said heat-exchange medium when the temperature of said heat-exchange medium measured is outside a predetermined temperature range;
controlling a supply amount of said heat-exchange medium so as to bring a heat-exchange medium supply weight per unit weight of said heat storage into a predetermined range when the temperature is within the predetermined temperature range; and
supplying said heat-exchange medium to said heat-storage tank at said flow rate controlled.

11. The method of operating a heat-storage apparatus according to Claim 10, wherein
said heat storage is erythritol.

12. The method of operating a heat-storage apparatus according to Claim 11, wherein
the specific heat of said heat-exchange medium is between 1.9kJ/kg°C and 2.5kJ/kg°C.

13. The method of operating a heat-storage apparatus according to Claim 12, wherein
in the case of storing heat in said heat-storage tank,
said predetermined temperature range is 125°C or higher and 165°C or lower, and
the flow rate of said heat-exchange medium is controlled so as to become the flow rate of 2.6kg/hr or higher and 13kg/hr or lower per unit weight of said heat storage.

14. The method of operating a heat-storage apparatus according to Claim 12, wherein
in the case of storing heat in said heat-storage tank,
said predetermined temperature range is 125°C or higher and 165°C or lower, and
the flow rate of said heat-exchange medium is controlled so as to become the flow rate of 3.4kg/hr or higher and 13kg/hr or lower per unit weight of said heat storage.

15. The method of operating a heat-storage apparatus according to Claim 12, wherein
in the case of storing heat in said heat-storage tank,
said predetermined temperature range is 140°C or higher and 165°C or lower, and
the flow rate of said heat-exchange medium is controlled so as to become the flow rate of 5.2kg/hr or higher and 13kg/hr or lower per unit weight of said heat storage.

16. The method of operating a heat-storage apparatus according to Claim 12, wherein
in the case of taking out heat stored in said heat-storage tank,
the flow rate to be supplied to said heat-storage tank is controlled so as to become the flow rate of 0.25kg/hr or higher and 10.4kg/hr or lower per unit weight of said heat storage.

17. The method of operating a heat-storage apparatus according to Claim 12, wherein
in the case of taking out heat stored in said heat-storage tank,
the flow rate to be supplied to said heat-storage tank is controlled so as to become the flow rate of 0.5kg/hr or higher and 10.4kg/hr or lower per unit weight of said heat storage.

18. The method of operating a heat-storage apparatus according to Claim 12, wherein
in the case of taking out heat stored in said heat-storage tank,
the flow rate to be supplied to said heat-storage tank is controlled so as to become the flow rate of 0.8kg/hr or higher and 10.4kg/hr or lower per unit weight of said heat storage.
